# EUROPÄISCHE PATENTSCHRIFT

(11) **EP 1 675 251 B1**
(45) Veröffentlichungstag und Bekanntmachung des Hinweises auf die Patenterteilung: **27.02.2008**
(21) Anmeldenummer: 05026432.4
(22) Anmeldetag: 03.12.2005
(51) Int. Cl.: H02K 21/22, E06B 9/72

(54) **Rohrmotor für Jalousien**
Tube motor for window blinds
Moteur-tube pour jalousies

(30) Priorität: 22.12.2004 DE 102004063067
(43) Veröffentlichungstag der Anmeldung: 28.06.2006
(73) Patentinhaber: Gerhard Geiger GmbH & Co., 74321 Bietigheim-Bissingen (DE)
(72) Erfinder: Dangel, Hans-Michael, 74321 Bietigheim-Bissingen (DE)
(74) Vertreter: Jeck, Anton

(56) Entgegenhaltungen:
- DE-A1- 10 104 234
- DE-C1- 19 634 949
- US-B1- 6 700 246

## Beschreibung

Die Erfindung betrifft eine Antriebsvorrichtung gemäß dem Oberbegriff des Anspruchs 1.

Derartige Antriebsvorrichtungen sind allgemein vielfach bekannt. Sie arbeiten mit elektrischem Strom und weisen einen mit einer Spulenanordnung bewickelten Stator und einen mit der Antriebswelle verbundenen Rotor auf. Vielfach weisen auch die Rotoren eine Spulenanordnung auf, und die Rotoren sind mit Schleifringen und Kohlestiften zur Zuführung des Rotorstroms versehen, oder die Motoren sind als Asynchronmotoren ausgebildet. Im Allgemeinen umfasst die Antriebsvorrichtung außer dem eigentlichen Motor noch eine Endabschalteinheit, eine Bremse und ein mehrstufiges Planetengetriebe. Mit diesen Antriebsvorrichtungen können die bei Jalousien, Markisen, Rollläden und dergleichen erforderlichen Drehmomente nur mittels eines hohe Untersetzungen (> ca. 1:100) aufweisenden Getriebes erreicht werden. Bei Einphasen-Kondensator-Motoren ist zudem eine Drehzahlregelung kaum möglich. Die Drehzahl der Antriebsvorrichtungen ist nicht konstant, sondern belastungsabhängig. Ferner ist die Fertigung dieser Antriebsvorrichtungen recht kompliziert und damit kostenträchtig.

Durch zahlreiche Dokumente sind so genannte Transversalflussmotoren bekannt. Beispielsweise ist in der DE 101 04 234 A1 ein als Innenläufer ausgebildeter Transversalflussmotor mit einem Stator offenbart, der eine ringförmige Statorspule mit einer Mittelachse aufweist und bei dem die Statorspule längs ihres Umfangs von zumindest annähernd C-förmigen Statorblechpaketen umfasst ist. Jeweils benachbarte C-förmige Statorblechpakete sind dabei abwechselnd mit den freien Enden ihrer Schenkel radial nach innen und nach außen gerichtet. Die Statorbleche sind zumindest abschnittsweise im Wesentlichen tangential zur Mittelachse der Statorspule oder dem Umfang der Statorspule folgend orientiert. Der Motor weist ferner einen Rotor aus einem mit der Antriebswelle verbundenen Träger und mindestens einem am Träger befestigten Ring aus abwechselnden Magnetpolen auf, die den Schenkeln jeweils benachbarter Statorblechpakete gegenüberstehen. Mit einem solchen Transversalflussmotor können sehr kompakte, niedrigdrehende Motoren mit sehr hohem Wirkungsgrad und einer hohen Leistung auf einfache Weise hergestellt werden.

Aus der DE 196 34 949 C1 ist ein Transversalflussmotor bekannt, der mit einem Außenläufer ausgebildet und mit einem Permanentmagnete aufweisenden Rotor versehen ist. Es sind auch mehrphasige Motoren dargestellt, wobei mindestens ein Gehäusetrennteil verwendet wird, an dem zu beiden Seiten Statorteile mit jeweils einer Spulenanordnung befestigt sind. An eine Verwendungsmöglichkeit als Rohrmotor für Jalousien usw. ist aber nicht gedacht worden. Die dargestellten Ausführungsbeispiele eignen sich auch nicht dafür, weil die Außenläufer über einen Ringerheblicher Höhemit der Motorwelle verbunden sind und der Motor daher nicht die für einen Rohrmotor nötige Kompaktheit aufweist.

Aus der DE 199 53 200 A1, der DE 102 37 203 A1 und WO 96/19861 A1 sind Transversalflussmotoren bekannt, die als Innenläufer ausgebildet sind. Bei der erstgenannten Schrift ist ein Getriebe vorgesehen, und es wird auch eine mit einer Schlingfeder arbeitende Motorbremse vorgeschlagen. Bei der zweitgenannten Schrift wird darauf hingewiesen, dass ein mechanisches Getriebe auch entfallen kann und die Drehmomente an an die Raddrehzahlen von Fahrzeugen leicht angepasst werden können.

Ferner ist beispielsweise aus der WO 99/48190 A1 ein Transversalflussmotor mit C-förmigen Magnetflussjochen bekannt, die zusätzlich am Luftspalt I-förmige Magnetflussjoche aufweisen.

Schließlich ist beispielsweise aus der EP 0 218 522 noch ein Transversalflussmotor bekannt, der ebenfalls C-förmige Magnetflussjoche und zusätzlich in axialen Reihen angeordnete Magnetfluss-Leitstücke aufweist. Letztere sind mit Permanentmagnetelementen des Rotors zumindest teilweise fluchtend ausgerichtet. Hierbei verläuft der Luftspalt axial.

Die bekannten Transversalflussmotoren werden insbesondere in der Automobilindustrie oder in Werkzeugmaschinen verwendet und sind nicht für einen Einsatz bei Rohrmotoren für Jalousien, Markisen, Rollläden und dergleichen gedacht.

Die Erfindung hat zur Aufgabe, eine Antriebsvorrichtung der im Oberbegriff des Anspruchs 1 genannten Art zu schaffen, die für Jalousien, Markisen, Rollläden und dergleichen geeigneter ist. Insbesondere soll ein hohes Drehmoment auf beengtem Raum bereitgestellt werden, und niedrige Drehzahlen, hohe Haltemomente und ein einfacher und robuster Aufbau sollen erreicht werden.

Diese Aufgabe wird mit den Merkmalen des Anspruchs 1 gelöst.

Die Antriebsvorrichtung gemäß der Erfindung kann auf engstem Raum, wie es für den Anwendungszweck gewünscht wird, zusammengebaut werden, wobei sie bei hoher Leistungsdichte hochwirksam arbeitet. Durch die gedrängte Bauweise wird der Wirkungsgrad des Motors erhöht. Die drehmomentabhängigen Verluste können vermindert werden. Gegenüber den sonstigen Motoren liegen dabei die Spulen konzentrisch um die Motorachse, die damit einfach hergestellt werden können.

Da das verwendete Motorprinzip hohe Drehmomente bei kleinen Drehzahlen zur Verfügung stellen kann, kann auf ein Getriebe verzichtet werden. Durch das fehlende Getriebe werden die Geräusche der Antriebsvorrichtung vermindert. Die Drehzahl des Transversalflussmotors kann elektronisch geregelt werden. Durch den hohen Wirkungsgrad ist die Laufzeit viel weniger begrenzt, und diese Antriebsvorrichtung eignet sich auch sehr gut für den Betrieb mit Batterien oder Akkumulatoren.

Gemäß einer weiteren Ausbildung der Erfindung kann der Rohrmotor zwei oder mehrere einphasige Motorteile aufweisen, die vorzugsweise im Wesentlichen gleich ausgebildet sind. Dabei kann der für einen einstufigen Motor verwendete Motorteil als Grundmodul bei mehrstufigen Motoren mehrfach eingesetzt werden, so dass Antriebsvorrichtungen höherer Leistung kostengünstig hergestellt werden können.

Eine weitere Ausbildung der Erfindung sieht vor, dass der Transversalflussmotor in einen ersten Motorteil und einen zweiten Motorteil dadurch aufgeteilt ist, dass zwischen den Motorteilen als Teil des Motorgehäuses ein sich radial erstreckender, mit einer Zentralöffnung für die Motorwelle versehener Trennteil, an dem zu beiden Stirnseiten jeweils ein mit einer Spulenanordnung bewickelter Stator befestigt ist, und zu beiden Seiten des Trennteils jeweils ein im Querschnitt C-förmiger, auf der Motorwelle mit seinem Innenrohr befestigter und zum Trennteil sich öffnender Rotorteil vorgesehen ist. Dadurch wird ein einfacher Aufbau des Rohrmotors erzielt.

Gemäß einer vorteilhaften, weiteren Ausbildung der Erfindung ist das Innenrohr des Rotorteils teilweise in der Zentralöffnung aufgenommen.

Gemäß einer weiteren Ausbildung der Erfindung gleitet das Innenrohr des Rotorteils in der Zentralöffnung. Die Motorwelle wird dadurch gestützt.

Gemäß einer weiteren Ausbildung der Erfindung sind in einem Endteil des Motorgehäuses Steuerelemente für den Motor untergebracht. Diese Steuerelemente dienen vor allem der Endabschaltung und der Motorsteuerung und werden elektronisch betrieben. Die Antriebsvorrichtung kann direkt durch die Netzspannung oder alternativ mit einer Kleinspannung betrieben werden.

Gemäß einer weiteren Ausbildung der Erfindung wird der Motor im stromlosen Zustand zum Halten der Last mechanisch verriegelt. Hierbei können insbesondere herkömmliche form-, reib- oder kraftschlüssige Verriegelungen wie die nach dem Schlinfederprinzip, Elektromagnetprinzip oder dergleichen arbeitenden eingesetzt werden.

Die Erfindung wird nun anhand von Ausführungsbeispielen näher erläutert. Es zeigen:
- Fig. 1: eine Seitenansicht einer mit einem Transversalflussmotor arbeitenden, rohrförmigen Antriebsvorrichtung gemäß der Erfindung für Jalousien, Markisen, Rolläden oder dergleichen,
- Fig. 2: eine Stirnansicht der Antriebsvorrichtung der Fig. 1,
- Fig. 3: einen vergrößerten Längsschnitt durch die Antriebsvorrichtung der Fig. 1 und
- Fig. 4: eine perspektivische Explosionsansicht einer weiteren Ausführung einer Antriebsvorrichtung gemäß der Erfindung.

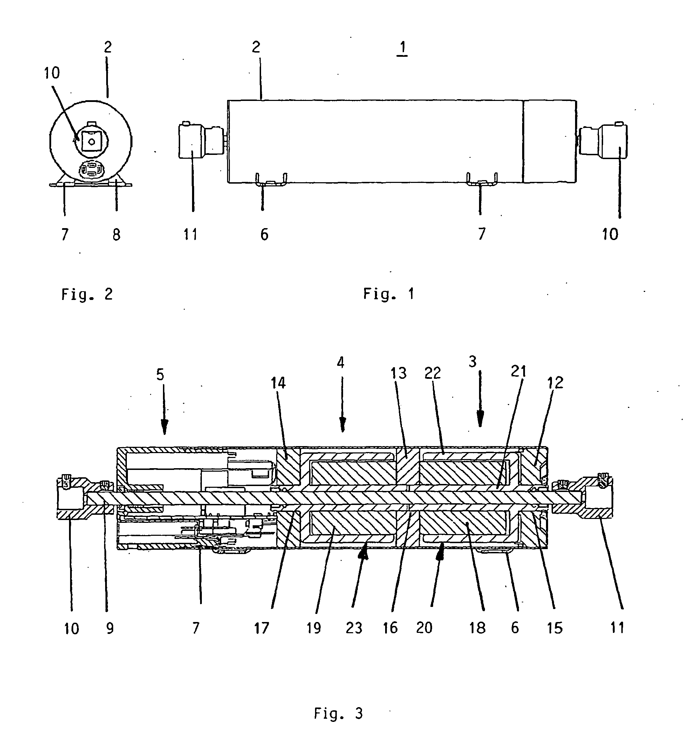

In den Figuren 1 bis 3 ist eine elektrische Antriebsvorrichtung 1 gezeigt, wie sie als Rohrmotor in Wickelrohren von Jalousien, Markisen, Rollläden uns dergleichen zum Einsatz kommt. Die Antriebsvorrichtung ist mit einem rohrförmigen Gehäuse 2 ausgestattet, das einen ersten Motorteil 3, einen zweiten Motorteil 4 und einen Steuerteil 5 aufweist. Die beiden Motorteile 3 und 4 bilden einen zweistufigen Transversalflussmotor, während im Steuerteil 5 die zur Endabschaltung und zur Steuerung des Transversalflussmotors erforderlichen elektronischen Steuerelemente untergebracht sind, die nicht im Einzelnen beschrieben werden. Das Gehäuse 2 ist sind, die nicht im Einzelnen beschrieben werden. Das Gehäuse 2 ist mit vier Schraubfüßen, wie den Schraubfüßen 6-8, versehen. Im Gehäuse 2 ist eine Motorwelle 9 an beiden Endbereichen mittels Kugellagern gelagert. Die Enden der Motorwelle 9 sind jeweils mit einem Kupplungsstück 10 bzw. 11 abgeschlossen. Zum Motorgehäuse 2 gehören ein Gehäusedeckel 12, ein mittlerer erster Trennteil 13 und ein zweiter Trennteil 14, die sich alle drei radial erstrecken und jeweils mit einer Zentralöffnung 15 bzw. 16 bzw. 17 versehen sind. Durch die Zentralöffnungen 15-17 verläuft die Motorwelle 9. Durch den Gehäusedeckel 12 und die Trennteile 13, 14 wird der Transversalflussmotor in die zwei Motorteile 3 und 4 aufgeteilt.

Am mittleren ersten Trennteil 13 sind zu beiden Stirnseiten in nicht dargestellter Weise zwei mit jeweils einer Spulenanordnung versehene Statorteile 18, 19 in Form von Zylindern befestigt. Diese Statorteile tragen über ihren Umfang verteilte, nicht dargestellte Flussleitstücke in nebeneinander liegenden Reihen über die Länge der Statorteile. Zwischen dem Gehäusedeckel 12 und dem Trennteil 13 ist ein im Querschnitt U-förmiger erster Rotorteil 20 mit einem Innenrohr 21 und einem Außenrohr 22 angeordnet. Das Innenrohr 21 ist auf der Motorwelle 9 befestigt, wobei es teilweise in die Zentralöffnungen 15, 16 hineinragt und dort vorzugsweise Gleitlagerfunktionen ausüben kann. Die Innenseite des Außenrohrs 22 ist mit über ihren Umfang verteilten Permanentmagnetelementen in Reihen versehen, die über die Länge dieser Innenseite nebeneinander liegen. In den Reihen sind die Permanentmagnetelemente mit abwechselnder Polarität angeordnet. Diese Permanentmagnetelemente liegen den Flussleitstücken des Stators 18 unter Bildung eines Luftspalts für den Transversalfluss gegenüber. In gleicher Weise ist ein zweiter Rotorteil 23 zwischen dem Trennteil 13 und dem Trennteil 14 angeordnet. Beide Rotorteile 20, 23 öffnen zum Trennteil 13. Der Statorteil 18 ragt dabei in den Rotorteil 20 hinein, während der Statorteil 19 in den Rotorteil 23 hineinragt. Durch den Transversalmagnetfluss wird eine Kraft erzeugt, die die Rotorteile 20, 23 und damit die Motorwelle 9 zum Drehen bringen.

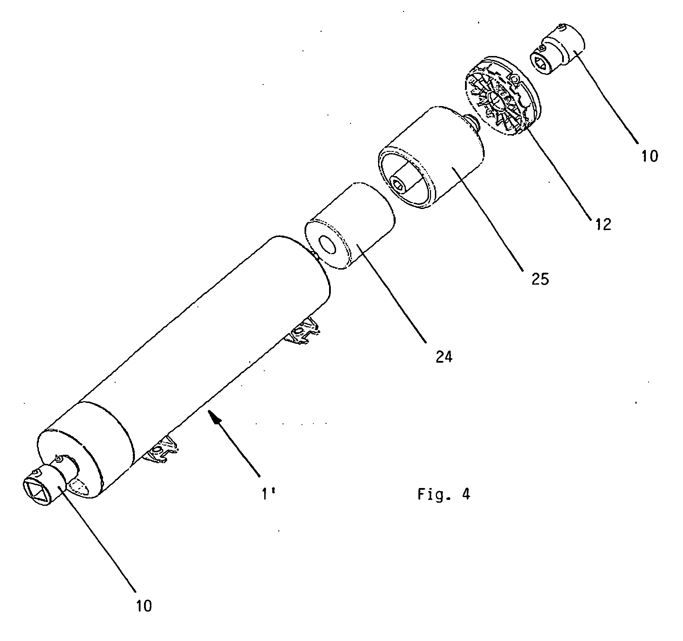

Eine weitere einfachere Ausführung einer Antriebsvorrichtung 1' gemäß der Erfindung für Jalousien oder Markisen ist in Fig. 4 dargestellt. Der als Außenläufer ausgebildete Transversalflussmotor weist nur einen einzigen Stator 24 und einen einzigen Rotor 25 auf, die ähnlich wie die beschriebenen Statorteile 18, 19 bzw. Rotorteile 20, 23 ausgebildet sind. Diese Antriebsvorrichtung ist für kleinere Leistungen vorgesehen.

Wenn größere Leistungen erforderlich sind, können auch mehrstufige Transversalflussmotoren nach dem anhand der Fig. 1 beschriebenen Prinzip verwendet werden, wobei die Rotorteile und Statorteile jeweils die gleiche Modulbauart aufweisen.

## Patentansprüche

1. Antriebsvorrichtung (1, 1') mit einem elektrisch betriebenen, einen Stator (18, 19; 24) und einen Rotor (20, 23; 25) aufweisenden Rohrmotor für Jalousien, Markisen, Rollläden und dergleichen,
**dadurch gekennzeichnet,**
**dass** als Rohrmotor (3, 4) ein Transversalflussmotor verwendet wird, der als Außenläufer ausgebildet und mit einem Permanentmagnetelement aufweisenden Rotor (20, 23, 25) versehen ist.

2. Antriebsvorrichtung nach Anspruch 1,
**dadurch gekennzeichnet,**
**dass** der Rohrmotor zwei oder mehrere einphasige Motorteile (3, 4) aufweist, die vorzugsweise im Wesentlichen gleich ausgebildet sind.

3. Antriebsvorrichtung nach Anspruch 1 oder 2,
**dadurch gekennzeichnet,**
**dass** der Transversalflussmotor in einen ersten Motorteil (3) und einen zweiten Motorteil (4) dadurch aufgeteilt ist, dass zwischen den Motorteilen als Teil des Motorgehäuses (2) ein sich radial erstreckender, mit einer Zentralöffnung (16) für die Motorwelle (9) versehener Trennteil (13), an dem zu beiden Stirnseiten jeweils ein mit einer Spulenanordnung bewickelter Statorteil (18, 19) befestigt ist, und zu beiden Seiten des Trennteils jeweils ein im Querschnitt U-förmiger, auf der Motorwelle mit seinem Innenrohr (21) befestigter und zum Trennteil (13) sich öffnender Rotorteil (20, 23) vorgesehen ist.

4. Antriebsvorrichtung nach Anspruch 3,
**dadurch gekennzeichnet,**
**dass** das Innenrohr (21) des Rotorteils (20) teilweise in der Zentralöffnung (16) aufgenommen ist.

5. Antriebsvorrichtung nach Anspruch 4,
**dadurch gekennzeichnet,**
**dass** das Innenrohr (21) des Rotorteils (20) in der Zentralöffnung (16) gelagert ist.

6. Antriebsvorrichtung nach einem der Ansprüche 2 bis 5,
**dadurch gekennzeichnet,**
**dass** in einem Endteil (5) oder dem Trennteil des Motorgehäuses (2) elektronische Steuerelemente für den Motor untergebracht sind.

7. Antriebsvorrichtung nach einem der Ansprüche 1 bis 6,
**dadurch gekennzeichnet,**
**dass** der Motor im stromlosen Zustand zum Halten der Last mechanisch, insbesondere durch nach dem Schlingfederprinzip arbeitende Mittel, verriegelt wird.

## Claims

1. A drive mechanism (1, 1') having an electrically driven tube-enclosed motor with a stator (18, 19, 24) and a rotor (20, 23, 25) for Venetian blinds, awnings, shutters and the like,
**characterized in that**
a transverse flux motor is employed as the tube-enclosed motor, which is embodied as an external rotor motor and is provided with a rotor (20, 23, 25) having a permanent magnet element.

2. The drive mechanism in accordance with claim 1,
**characterized in that**
the tube-enclosed motor has one or a plurality of single-phase motor elements (3, 4), which are preferably embodied to be substantially identical.

3. The drive mechanism in accordance with claim 1 or 2,
**characterized in that**
the transverse flux motor is divided into a first motor element (3) and a second motor element (4) **in that** a radially extending separating element (13) is fastened between the elements as a part of the motor housing (2) and is provided with a central opening (16) for the motor shaft (9), on the two ends of which a stator element (18, 19), which is provided with a coil arrangement, is respectively fastened, and that a rotor element (20, 23) is provided, which opens toward the separating element (13), is U-shaped in cross section and is fastened on the motor shaft with its interior tube (21).

4. The drive mechanism in accordance with claim 3,
**characterized in that**
the interior tube (21) of the rotor element (20) is partially received on the central opening (16).

5. The drive mechanism in accordance with claim 4,
**characterized in that**
the interior tube (21) of the rotor element (20) is seated in the central opening (16).

6. The drive mechanism in accordance with one of claims 2 to 5,
**characterized in that**
electronic control elements for the motor are housed in an end section (5) or the separating section of the motor housing (2).

7. The drive mechanism in accordance with one of claims 1 to 6,
**characterized in that**
for supporting the load in the currentless state, the motor is mechanically locked, in particular by means operating in accordance with the wrap spring principle.

## Revendications

1. Dispositif (1, 1') d'entraînement comprenant un moteur-tube entraîné électriquement et ayant un stator ( 18, 19, 24) et un rotor ( (20, 23, 25) pour des jalousies, des stores, des volets roulants et analogues,
**caractérisé,**
**en ce que** l'on utilise comme moteur-tube (3, 4) un moteur à flux transversal qui est sous la forme d'un induit extérieur et qui est muni d'un rotor (20, 23, 25) ayant un élément à aimant permanent.

2. Dispositif d'entraînement suivant la revendication 1,
**caractérisé,**
**en ce que** le moteur-tube a deux ou plusieurs parties (3, 4) de moteur monophasées, qui de préférence sont sensiblement identiques.

3. Dispositif d'entraînement suivant la revendication 1 ou 2,
**caractérisé,**
**en ce que** le moteur à flux transversal est subdivisé en une première partie (3) de moteur et en une deuxième partie (4) de moteur, en ce qu'entre les parties de moteur est prévue, en tant que partie du carter (2) de moteur, une partie (13) de séparation, qui s'étend radialement, qui est munie d'une ouverture (16) centrale pour l'arbre (9) du moteur et à laquelle est fixée des deux côtés frontaux respectivement une partie (18, 19) de stator enroulée d'un dispositif à bobine et des deux côtés de la partie de séparation respectivement une partie (20, 23) de rotor de section transversale en forme de U, ² fixée sur l'arbre du moteur par son tube (21) intérieur et s'ouvrant vers la partie (13) de séparation.

4. Dispositif d'entraînement suivant la revendication 3,
**caractérisé**
**en ce que** le tube (21) intérieur de la partie (20) de rotor est reçue en partie dans l'ouverture (16) centrale.

5. Dispositif d'entraînement suivant la revendication 4,
**caractérisé**
**en ce que** le tube (21) intérieur de la partie (20) de rotor est monté dans l'ouverture (16) centrale.

6. Dispositif d'entraînement suivant l'une des revendications 2 à 5,
**caractérisé**
**en ce que** des éléments électroniques de commande du moteur sont logés dans une partie (5) d'extrémité ou dans la partie de séparation du carter (2) du moteur.

7. Dispositif d'entraînement suivant les revendications 1 à 6,
**caractérisé**
**en ce que** le moteur, à l'état sans courant, est, pour le maintien de la charge, verrouillé mécaniquement, notamment par des moyens fonctionnant suivant le principe du ressort enroulé.
